# EUROPÄISCHE PATENTSCHRIFT

(11) **EP 0 650 828 B1**
(45) Veröffentlichungstag und Bekanntmachung des Hinweises auf die Patenterteilung: **21.04.1999**
(21) Anmeldenummer: 94117080.5
(22) Anmeldetag: 28.10.1994
(51) Int. Cl.: B32B 5/24, B32B 5/08, B32B 31/04

(54) **Schichtkörper, Verfahren zu seiner Herstellung und dessen Verwendung**
Laminated body, method of production and use thereof
Corps stratifié, procédé pour sa fabrication et son utilisation

(30) Priorität: 02.11.1993 DE 4337352
(43) Veröffentlichungstag der Anmeldung: 03.05.1995
(73) Patentinhaber: Findlay Industries Deutschland GmbH, 82538 Geretsried (DE)
(72) Erfinder: Gardill, Rainer, Dr., D-83677 Reichersbeuern (DE); Feist, Gunther, D-83022 Rosenheim (DE)
(74) Vertreter: Jönsson, Hans-Peter, Dr.Dipl.-Chem.

(56) Entgegenhaltungen:
- DE-A- 2 701 431
- DE-A- 3 614 533
- US-A- 4 445 954
- US-A- 4 840 832
- US-A- 4 851 283
- DATABASE WPI Week 8745, Derwent Publications Ltd., London, GB; AN 87-316587 (45) & JP-A-62 223 356 (MITSUBISHI YUKA BAD) 1. Oktober 1987

## Beschreibung

Die Erfindung betrifft einen Schichtkörper mit einem flächigen Trägerteil aus einem verfestigten Basisvlies mit einem Gehalt an thermoplastischen Kunststoffasern, welches zumindest auf einer Seite mit einer kunststoffhaltigen Deckschicht versehen ist, sowie ein Verfahren zur Herstellung und die Verwendung eines derartigen Schichtkörpers.

Schichtkörper der vorstehend beschriebenen Art, beispielsweise Formteile aus Vliesen, die aus Polyesterfasern bestehan, wie sie in der DE-A 40 41 934 beschrieben sind, werden in der Weise hergestellt, daß sie zunächst auf eine Temperatur erhitzt werden. die oberhalb der Erweichungstemperatur der Kunststoffasern liegt, woraufhin sie dann in einem kalten oder auch heißen Werkzeug unter Druck verformt und anschließend abgekühlt werden. Dabei entstehen steife Formteile, die sich alsdann z.B. als Auskleidungsteile für Kraftfahrzeuge verwenden lassen.

Es ist auch bekannt, derartige Schichtkörper nicht aus reinen Kunststoffasern, z.B. Polyesterfasern herzustellen, sondern aus Mischvliesen, beispielsweise aus Jute mit Polyesterfasern, wie es in der GB-A 2,090,849 beschrieben ist, oder aus Flachsfasern mit thermoplastischen Polymeren, so wie Polypropylenen, wie es die US-A 4,323,625 offenbart, sowie aus Flachs oder anderen lignozellulosischen Fasern mit Polypropylenglycol oder Polyester-Polyolen, wie aus der US-A 4,546,039 bekannt. Auch bekannt ist die Verwendung von Flachsfasern mit Bikomponentenfasern, beispielsweise mit 30 bis 50 Gew.% Polypropylen/Polyethylen-Bikomponentenfasern.

Sollen unter Verwendung derartiger verfestigter Vliese Schichtkörper der gattungsgemäßen Art hergestellt werden, so ist es in der Regel notwendig, die Deckschicht, beispielsweise entweder eine Dekorschicht auf der Vorderseite des Schichtkörpers und/oder eine Sperrfolie oder ein Crash-Pad auf der Rückseite des Schichtkörpers, welche im allgemeinen aus temperaturempfindlichem Material bestehen, wie (insbesondere PVC-) Schaumfolien, Kunststoff-, insbesondere PVC-Kompaktfolien, temperaturempfindlichen Stoffdekoren oder Polyurethan-Weichschaum auf das bereits fertig verfestigte Basisvlies nach dem Preßvorgang aufzukleben, weil insbesondere bei Verwendung von Mischfaservliesen wegen des hohen nicht-thermoplastischen Faseranteils des Basisvlieses keine ausreichende Haftung zu der Deckschicht erzielt werden kann, auch dann nicht, wenn man versucht, die Haftung der Deckschicht an dem Basisvlies dadurch zu verbessern, daß benachbart zu dem Basisvlies auf die Deckschicht ein Baumwollgewebe oder dergleichen aufgebracht wird. Der Grund hierfür liegt in folgendem:

Zwischen dem thermoplastischen Anteil des Basiswerkstoffs und dem Material der Deckschicht besteht von Grund auf nur eine geringe Klebekraft, vor allem, wenn die Deckschicht nicht auf eine Temperatur oberhalb ihres Erweichungspunktes erwärmt wird. Durch den Anteil der nicht-thermoplastischen Fasern im Basisvlies wird die Anzahl der Kontaktstellen der klebefähigen thermoplastischen Fasern des Basisvlieses zu der Deckschicht reduziert, so daß auch mit Baumwollgeweben und dergleichen als Haftvermittler keine ausreichende Verbindung hergestellt werden kann. Ein Erwärmen temperaturempfindlicher Deckschichten auf die Erweichungstemperatur ist nicht möglich, da dann beim Pressen z.B. strukturierte Oberflächen von Dekoren beschädigt werden. Andererseits wird durch die lockere Struktur des Basisvlieses bei hinreichender Erwärmung desselben soviel Wärmeenergie gespeichert, daß hierdurch eine unzulässige Erwärmung der Dekorschichten erfolgt.

Die thermische Beeinträchtigung insbesondere einer Dekorschicht läßt sich durch den Einsatz entsprechend stark gekühlter Preßwerkzeuge nicht verhindern, weil bei zu niedriger Oberflächentemperatur z.B. an einer an das Basisvlies angrenzenden Kunststoff-Deckfolie der Deckschicht ein sogenannter Weißbruch als Fehler in den Umformbereichen auftritt, wenn die Grenzflächentemperatur zu niedrig ist. Bei Verwendung von Schaumfolien anstelle von Kompaktfolien für die Deckschicht sowie bei Deckschichten mit Weichschaum-Unterschichten wird zusätzlich die Wärmeabführung auch bei stark gekühlten Werkzeugen zu gering, so daß in der Regel die Schaumstruktur partiell zerstört wird.

Der Erfindung liegt die Aufgabe zugrunde, einen Schichtkörper der eingangs genannten Art zu schaffen, bei dem in einem einzigen Preß- oder Kaschiervorgang gleichzeitig die Verfestigung des Basisvlieses durch Anwendung von Druck und Wärme und dessen zuverlässige Verbindung mit auch temperaturempfindlichen Deckschichten möglich ist. Ferner sollen ein Verfahren zur Herstellung eines derartigen Schichtkörpers sowie dessen Verwendung angegeben werden.

Erfindungsgemäß wird diese Aufgabe bei einem Schichtkörper der eingangs genannten Art dadurch gelöst, daß das Basisvlies mit der Deckschicht durch Anwendung von Druck und Wärme über eine Zwischenschicht mit thermoplastischem Anteil verbunden ist, deren Material von demjenigen der Kunststoffasern des Basisvlieses verschieden oder gleich ist und deren Erweichungstemperatur oberhalb derjenigen der Kunststoffasern des Basisvlieses liegt.

Dabei kann vorgesehen sein, daß das Basisvlies Polyethylenfasern aufweist.

Ferner kann vorgesehen sein, daß das Basisvlies Polypropylenfasern aufweist.

Ferner sieht die Erfindung auch vor, daß das Basisvlies ein Mischfaservlies aus thermoplastischen Kunststoffasern und Naturfasern ist.

Dabei schlägt die Erfindung vor, daß das Basisvlies Jutefasern aufweist.

Auch kann vorgesehen sein, daß das Basisvlies Flachsfasern aufweist.

Die Erfindung sieht auch vor, daß das Basisvlies Sisalfasern aufweist.

Ferner schlägt die Erfindung auch vor, daß das Basisvlies Baumwollfasern aufweist.

Es kann auch vorgesehen sein, daß das Basisvlies Wollfasern aufweist.

Weiter sieht die Erfindung vor, daß das Basisvlies ein Flächengewicht von 500 bis 3000 g/m² hat.

Schließlich schlägt die Erfindung vor, daß das Basisvlies ein Flächengewicht von 1500 bis 2500 g/m² hat.

Ferner kann vorgesehen sein, daß das Basisvlies ein Flächengewicht von ca. 2000 g/m² hat.

Die Erfindung sieht auch vor, daß das Basisvlies zu 20 bis 80 Gew.% aus Kunststoffasern und zu 80 bis 20 Gew.% aus Naturfasern besteht.

Bevorzugt ist dabei, daß das Basisvlies etwa zu gleichen Gewichtsteilen Kunststoffasern und Naturfasern enthält.

Auch schlägt die Erfindung vor, daß die Zwischenschicht ein Vlies ist.

Dabei kann dieses Vlies ein Polyestervlies sein.

Ebenso schlägt die Erfindung vor, als Zwischenschicht eine Schaumfolie einzusetzen.

Weiterhin kann vorgesehen sein, daß die Zwischenschicht ein Flächengewicht von 100 bis 500 g/m² hat.

Die Erfindung sieht auch vor, daß die Zwischenschicht ein Flächengewicht von etwa 300 g/m² hat.

Es kann vorgesehen sein, daß die Deckschicht über die Zwischenschicht mit dem Basisvlies verbunden ist.

Dabei kann die Deckschicht eine Sperrfolie, ein Crash-Pad oder auch eine Dekorschicht sein.

Dabei sieht die Erfindung vor, daß die Deckschicht aus Polyvinylchlorid besteht.

Gegebenenfalls kann vorgesehen sein, daß die Deckschicht, insbesondere bei der Verwendung als Dekorschicht, aus Stoff besteht.

Ferner kann so vorgegangen werden, daß zwischen der Deckschicht und der Zwischenschicht eine Schaumschicht liegt, die mit der Deckschicht verbunden ist.

Nach einer bevorzugten Ausgestaltung weist das Basisvlies einen Dichtegradienten bezüglich des Kunststoffasermaterials auf, wobei beispielsweise die der Deckschicht bzw. der Kunststoff-Zwischenschicht zugewandte Seite einen höheren Kunststoffanteil aufweist als die der Rückseite benachbarte Lage. Die entsprechende Dichteänderung kann dabei entweder kontinuierlich sein, beispielsweise erzeugt durch aerodynamische Vlieslegung, oder auch diskontinuierlich, beispielsweise durch mehrlagige Ausbildungen das Basisvlieses hervorgerufen.

Das erfindungsgemäße Verfahren zum Herstellen von flächigen Schichtkörpern der erfindungsgemäßen Art, bei dem ein Basisvlies, welches einen Gehalt an thermoplastischen Kunststoffasern aufweist, durch Anwendung von Druck und Wärme verfestigt und auf mindestens einer Seite mit einer kunststoffhaltigen Deckschicht verbunden wird, zeichnet sich dadurch aus, daß das Basisvlies zunächst auf eine Temperatur erwärmt wird, die oberhalb der Erweichungstemperatur der Kunststoffasern des Basisvlieses liegt; und daß dann das erwärmte Basisvlies, eine sich daran anschließende Zwischenschicht mit thermoplastischem Anteil, deren Material von demjenigen der Kunststoffasern des Basisvlieses verschieden oder gleich ist und deren Erweichungstemperatur oberhalb derjenigen der Kunststoffasern des Basisvlieses liegt und welches nicht vorerwärmt wird, sowie die ebenfalls nicht vorerwärmte Deckschicht einem gemeinsamen Preßvorgang unterworfen werden, bei dem sowohl die Verfestigung des Basisvlieses als auch die Verbindung der Deckschicht mit demselben erfolgt.

Dabei kann vorgesehen sein, daß das Aufwärmen des Basisvlieses mittels heißer Durchluft erfolgt.

Es kann weiter vorgesehen sein, daß das Basisvlies nach dem Vorerwärmen zunächst vorverdichtet wird, beispielsweise auf eine Stärke von 1 mm oberhalb der gewünschten Endstärke. Vorteilhaft ist dabei, daß ein geringerer Preßdruck bei der endgültigen Herstellung des Schichtkörpers eingesetzt werden kann, wobei insbesondere eine Dekorschicht geschont wird. Ein weiterer Vorteil des Vorverdichtens besteht darin, daß das Basisvlies dann vor dem Zusammenbringen mit der Deckschicht und der Zwischenschicht schon eine glatte Oberfläche aufweist.

Die Erfindung schlagt weiter vor, daß die Zwischenschicht vor dem Zusammenbringen mit dem Basisvlies mit der Deckschicht verbunden wird.

Ferner sieht die Erfindung auch vor, daß die Zwischenschicht mit der Deckschicht verklebt wird.

Nach der Erfindung kann auch vorgesehen sein, daß zusätzlich zum Basisvlies die Deckschicht vorerwärmt wird, und zwar auf eine Temperatur oberhalb der Raumtemperatur, jedoch unterhalb der Temperatur, auf die das Basisvlies vorerwärmt wird.

Dabei liegt die Vorwärmtemperatur der Deckschicht bevorzugt zwischen 80 und 120°C.

Weiterhin wird vorgeschlagen, daß das Basisvlies vor dem Zusammenlegen des Paketes aus vorerwärmtem Basisvlies, nicht-vorerwärmter Zwischenschicht und nicht-vorerwärmter oder nur gering vorerwärmter Dekorschicht auf etwa 200°C erwärmt wird.

Es kann auch vorgesehen sein, daß der Preßvorgang bei einer Temperatur von etwa 60°C durchgeführt wird.

Ferner schlägt die Erfindung vor, daß die Preßzweit 30 bis 140 Sekunden beträgt.

Vorteilhaft sollte die Preßzeit ca. 90 Sekunden betragen.

Die Erfindung lehrt ferner eine Verwendung des Schichtkörpers nach der Erfindung zum Auskleiden von Kraftfahrzeugen, als Verpackungsmaterial und/oder als Bauteil von Möbeln.

Der Erfindung liegt die überraschende Erkenntnis zugrunde, daß es gelingt, ohne Gefahr einer Beschädigung des Materials der Deckschicht auch bei temperaturempfindlichen Deckmaterialien eine zuverlässige Verbindung, in einem einzigen Preß- oder Kaschiervorgang, zusammen mit der Verfestigung des Basisvlieses auch dann zu erzielen, wenn das Basisvlies einen hohen Anteil nicht-thermoplastischer Fasern, insbesondere Naturfasern, aufweist, indem zwischen dem Basisvlies und der Deckschicht eine dünne, feste Zwischenschicht, vorzugsweise eine Polyesterschicht, angeordnet wird. Auf der einen Seite schirmt die Zwischenschicht die Deckschicht ausreichend gegen eine untunlich hohen Wärmeübergang vom heißen Basisvlies ab, auf der anderen Seite wird durch die Zwischenschicht eine gute Haftung zum Basisvlies erreicht, obwohl die Erweichungstemperatur der Zwischenschicht allenfalls soweit erreicht wird, daß ein oberflächliches Erweichen der Fasern der Zwischenschicht stattfindet.

Mittels des erfindungsgemäßen Verfahrens lassen sich auch Dekorschichtmaterialien aus Kunststoff oder aus textilen Stoffen, die rückseitig mit einem temperaturempfindlichen Weichschaum versehen sind, einstufig hinterpressen. Eine auf der Rückseite des Schichtkörpers angebrachte Deckschicht kann eine Folie, beispielweise eine Sperrfolie sein, aber auch ein Crash-Pad oder dergleichen, oder auch Deckfolien. Alle derartigen Teile, die gegebenenfalls auch vorerwärmt werden können, können im einstufigen Formpreßvorgang angebracht werden.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:
- Figur 1: ein erstes Ausführungsbeispiel eines Schichtkörpers nach der Erfindung im Schnitt senkrecht zur Schichtkörperebene;
- Figur 2: ein weiteres Ausführungsbeispiel eines Schichtkörpers nach der Erfindung in Figur 1 entsprechender Darstellung; und
- Figur 3: ein drittes Ausführungsbeispiel eines Schichtkörpers nach der Erfindung.

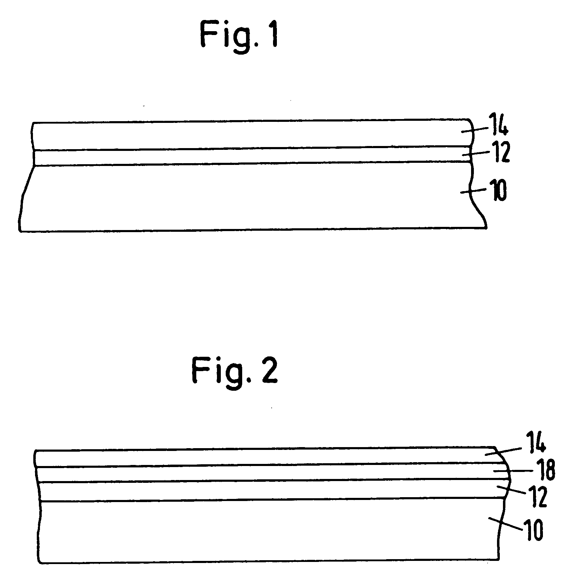

Wie Figur 1 erkennen läßt, weist der Schichtkörper nach der Erfindung bei dem dort gezeigten Ausführungsbeispiel ein Basisvlies 10 auf, bei dem es sich um ein Mischvlies handelt, welches aus 50 Gew.% Flachsfasern und 50 Gew.% Polyethylen/Polypropylen-Bikomponentenfasern besteht und ein Flächengewicht von 2000 g/m² hat. An das Basisvlies 10 schließt sich eine Zwischenschicht 12 an, bei der es sich um ein Polyestervlies mit einem Flächengewicht von 300 g/m² handelt, wie es beispielsweise unter der Bezeichnung Roy Polo E im Handel erhältlich ist. Im Anschluß an die Zwischenschicht 12 läßt Figur 1 eine Dekorfolie 14 (PVC-Dekorfolie, im Handel erhältlich, beispielsweise von der Firma Beneke) erkennen.

Beim Ausführungsbeispiel von Figur 2 ist im Anschluß an die Zwischenschicht 12 der anhand von Figur 1 bereits beschriebenen Art eine Schaumschicht 18 aus PUR-Weichschaum ("Molto-Schaum") angeordnet, auf die dann wiederum die Dekorschicht 14 folgt.

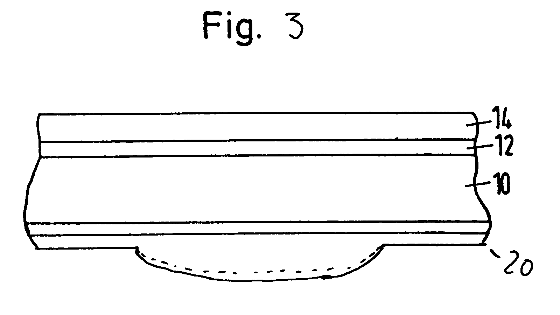

Nach der in Figur 3 veranschaulichten Ausführungsform besteht der Schichtkörper wieder aus dem Basisvlies 10, der Zwischenschicht 12 und der Dekorschicht 14, wie zuvor beschrieben, weiterhin ist aber auf der Rückseite des Basisvlieses 10 eine weitere Zwischenschicht 12 vorgesehen, entweder wieder aus dem vorbeschriebenen Polyestervlies oder aus einem Schaumstoff bestehend, auf der ein hier nur schematisch dargestelltes Crash-Pad 20 sowie eine Folie, gegebenenfalls als Sperrfolie ausgebildet, angeordnet ist.

Die Herstellung des Schichtkörpers erfolgt nach dem erfindungsgemäßen Verfahren in der nachstehend beschriebenen Weise:

Zunächst wird das Basisvlies 10 auf eine Temperatur von 200°C erwärmt. Anschließend werden das so vorerwärmte Basisvlies, die Zwischenschicht(en) 12 (Figuren 1 und 3) und die Dekorfolie 14, gegebenenfalls unter Zwischenschaltung der Schaumschicht 18, wie Figur 2 zeigt, sowie das Crash-Pad 20 mit der Sperrfolie (Figur 3) in ein Preßwerkzeug mit einer Temperatur von 60°C eingelegt, woraufhin mit einer Zuhaltezeit der Presse von 90 Sekunden der Preßvorgang erfolgt.

Sollen Befestigungsteile in den Schichtkörper eingebracht werden, beispielsweise Metall- oder Kunststoffcliphalter zur Aufnahme von Kunststoffclipsen, können diese mit in das Preßwerkzeug eingelegt und in dem gemeinsamen Preßvorgang mit eingepreßt werden.

Es werden Schichtkörper erhalten, bei denen eine zuverlässige Verbindung des Basisvlieses 10 mit dem Deckmaterial erzielt ist, ohne daß eine Beeinträchtigung des Deckmaterials durch thermische Überbelastung zu beobachten wäre.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Schichtkörper mit einem flächigen Trägerteil aus einem verfestigten Basisvlies mit einem Gehalt an thermoplastischen Kunststoffasern, welches zumindest auf einer Seite mit einer kunststoffhaltigen Deckschicht versehen ist, dadurch gekennzeichnet, daß das Basisvlies (10) mit der Deckschicht (14, 18) durch Anwendung von Druck und Wärme über eine Zwischenschicht (12) mit thermoplastischem Anteil, deren Material von demjenigen der Kunststoffasern des Basisvlieses (10) verschieden oder gleich ist und deren Erweichungstemperatur oberhalb derjenigen der Kunststoffasern des Basisvlieses (10) liegt, verbunden ist.

2. Schichtkörper nach Anspruch 1, dadurch gekennzeichnet, daß das Basisvlies (10) Polyethylenfasern aufweist.

3. Schichtkörper nach Anspruch 1 oder 2, dadurch gekennzeichnet, daß das Basisvlies (10) Polypropylenfasern aufweist.

4. Schichtkörper nach einem der Ansprüche 1 bis 3, dadurch gekennzeichnet, daß das Basisvlies (10) ein Mischfaservlies aus thermoplastischen Kunststoffasern und Naturfasern ist.

5. Schichtkörper nach Anspruch 4, dadurch gekennzeichnet, daß das Basisvlies (10) Jutefasern aufweist.

6. Schichtkörper nach Anspruch 4 oder 5, dadurch gekennzeichnet, daß das Basisvlies (10) Flachsfasern aufweist.

7. Schichtkörper nach einem der Ansprüche 4 bis 6, dadurch gekennzeichnet, daß das Basisvlies (10) Sisalfasern aufweist.

8. Schichtkörper nach einem der Ansprüche 4 bis 7, dadurch gekennzeichnet, daß das Basisvlies (10) Baumwollfasern aufweist.

9. Schichtkörper nach einem der Ansprüche 4 bis 8, dadurch gekennzeichnet, daß das Basisvlies (10) Wollfasern aufweist.

10. Schichtkörper nach einem der Ansprüche 1 bis 9, dadurch gekennzeichnet, daß das Basisvlies (10) ein Flächengewicht von 500 bis 3000 g/m² hat.

11. Schichtkörper nach Anspruch 10, dadurch gekennzeichnet, daß das Basisvlies (10) ein Flächengewicht von 1500 bis 2500 g/m² hat.

12. Schichtkörper nach Anspruch 1, dadurch gekennzeichnet, daß das Basisvlies (10) ein Flächengewicht von ca. 2000 g/m² hat.

13. Schichtkörper nach einem der Ansprüche 4 bis 12, dadurch gekennzeichnet, daß das Basisvlies (10) zu 20 bis 80 Gew.% aus Kunststoffasern und zu 80 bis 20 Gew.% aus Naturfasern besteht.

14. Schichtkörper nach Anspruch 13, dadurch gekennzeichnet, daß das Basisvlies (10) etwa zu gleichen Gewichtsteilen Kunststoffasern und Naturfasern enthält.

15. Schichtkörper nach Anspruch 1, dadurch gekennzeichnet, daß die Zwischenschicht (12) mit thermoplastischem Anteil ein Vlies ist.

16. Schichtkörper nach Anspruch 15, dadurch gekennzeichnet, daß die Zwischenschicht (12) ein Polyestervlies ist.

17. Schichtkörper nach Anspruch 1, dadurch gekennzeichnet, daß die Zwischenschicht (12) mit thermoplastischem Anteil eine Schaumfolie ist.

18. Schichtkörper nach einem der vorangehenden Ansprüche, dadurch gekennzeichnet, daß die Zwischenschicht (12) ein Flächengewicht von 100 bis 500 g/m² hat.

19. Schichtkörper nach Anspruch 18, dadurch gekennzeichnet, daß die Zwischenschicht (12) ein Flächengewicht von etwa 300 g/m² hat.

20. Schichtkörper nach einem der vorangehenden Ansprüche, dadurch gekennzeichnet, daß die Deckschicht (14) über die Zwischenschicht (12) mit dem Basisvlies (10) verbunden ist.

21. Schichtkörper nach Anspruch 20, dadurch gekennzeichnet, daß die Deckschicht (14) eine Sperrfolie ist.

22. Schichtkörper nach einem der vorangehenden Ansprüche, dadurch gekennzeichnet, daß die Deckschicht (14) aus Polyvinylchlorid besteht.

23. Schichtkörper nach einem der vorangehenden Ansprüche, dadurch gekennzeichnet, daß die Deckschicht (14) aus Stoff besteht.

24. Schichtkörper nach einem der vorangehenden Ansprüche, dadurch gekennzeichnet, daß zwischen der Deckschicht (14) und der Zwischenschicht (12) eine Schaumschicht (18) liegt, die mit der Deckschicht (14) verbunden ist.

25. Schichtkörper nach Anspruch 1, dadurch gekennzeichnet, daß das Basisvlies (10) in zur Flächenebene normaler Richtung einen Gradienten der Dichte des Kunststoffmaterials aufweist.

26. Schichtkörper nach Anspruch 25, dadurch gekennzeichnet, daß die Dichteänderung kontinuierlich ist.

27. Schichtkörper nach Anspruch 25, dadurch gekennzeichnet, daß die Dichteänderung diskontinuierlich ist.

28. Verfahren zum Herstellen eines flächigen Schichtkörpers nach einem der vorangehenden Ansprüche, bei dem ein Basisvlies, welches einen Gehalt an thermoplastischen Kunststoffasern aufweist, durch Anwendung von Druck und Wärme verfestigt und auf mindestens einer Seite mit einer Deckschicht verbunden wird, dadurch gekennzeichnet, daß das Basisvlies zunächst auf eine Temperatur erwärmt wird, die oberhalb der Erweichungstemperatur der Kunststoffasern des Basisvlieses liegt; und daß dann das erwärmte Basisvlies, eine daran anschließende Zwischenschicht mit thermoplastischem Anteil, deren Material von denjenigen der Kunststoffasern des Basisvlieses verschieden oder gleich ist und deren Erweichungstemperatur oberhalb derjenigen der Kunststoffasern des Basisvlieses liegt, und welche nicht vorerwärmt wird, sowie die ebenfalls nicht vorerwärmte Deckschicht einem gemeinsamen Preßvorgang unterworfen werden, bei dem sowohl die Verfestigung des Basisvlieses als auch die Verbindung der Deckschicht mit demselben erfolgt.

29. Verfahren nach Anspruch 28, dadurch gekennzeichnet, daß das Basisvlies durch heiße Durchluft aufgewärmt wird.

30. Verfahren nach Anspruch 28 oder 29, dadurch gekennzeichnet, daß das Basisvlies noch des Vorerwärmen zunächst Vorverdichtet wird.

31. Verfahren nach Anspruch 28, dadurch gekennzeichnet, daß die Zwischenschicht vor des Zusammenbringen mit dem Basisvlies mit der Deckschicht verbunden wird.

32. Verfahren nach Anspruch 28, dadurch gekennzeichnet, daß die Zwischenschicht mit der Deckschicht verklebt wird.

33. Verfahren nach Anspruch 28, dadurch gekennzeichnet, daß zusätzlich zum Basisvlies auch die Deckschicht vorerwärmt wird, und zwar auf eine Temperatur oberhalb Raumtemperatur, jedoch unterhalb der Temperatur, auf die das Basisvlies vorerwärmt wird.

34. Verfahren nach eines der Ansprüche 28 bis 33, dadurch gekennzeichnet, daß die Vorwärmtemperatur der Deckschicht zwischen 80 und 120°C liegt.

35. Verfahren nach eines der Ansprüche 28 bis 34, dadurch gekennzeichnet, daß das Basisvlies vor dem Zusammenlegen des Paketes aus vorerwärmtem Basisvlies, nicht-vorerwärmter oder nur gering vorerwärmter Zwischenschicht und nicht-vorerwärmter Deckschicht auf etwa 200°C erwärmt wird.

36. Verfahren nach Anspruch 35, dadurch gekennzeichnet, daß der Preßvorgang bei einer Temperatur von etwa 60°C durchgeführt wird.

37. Verfahren nach eines der Ansprüche 28 bis 36, dadurch gekennzeichnet, daß die Preßzeit 30 bis 140 Sekunden beträgt.

38. Verfahren nach Anspruch 37, dadurch gekennzeichnet, daß die Preßzeit ca. 90 Sekunden beträgt.

39. Verwendung des Schichtkörpers nach einem der Ansprüche 1 bis 27 zum Auskleiden von Kraftfahrzeugen.

40. Verwendung des Schichtkörpers nach einem der Ansprüche 1 bis 27 als Verpackungsmaterial.

41. Verwendung des Schichtkörpers nach eines der Ansprüche 1 bis 27 als Bauteil von Möbeln.

## Claims

1. A sandwich, with a sheet-like support part consisting of a bonded basic non-woven fabric having a thermoplastic synthetic fibres content, and with a plastic-containing cover layer provided on at least one side thereof, characterized in that a basic non-woven fabric (10) is attached to the cover layer (14, 18) by the application of pressure and heat, by way of a tie layer (12) with a thermoplastic content, the material of the tie layer being the same as or different from that of the synthetic fibres of basic non-woven fabric (10), and the softening temperature of the tie layer being above that of the synthetic fibres of basic non-woven fabric (10).

2. A sandwich as claimed in claim 1, characterized in that said basic non-woven fabric (10) comprises polyethylene fibres.

3. A sandwich as claimed in claim 1 or 2, characterized in that said basic non-woven fabric (10) comprises polypropylene fibres.

4. A sandwich as claimed in any of claims 1 to 3, characterized in that said basic non-woven fabric (10) is a mixed-fibre non-woven fabric consisting of thermoplastic synthetic fibres and natural fibres.

5. A sandwich as claimed in claim 4, characterized in that said basic non-woven fabric (10) comprises jute fibres.

6. A sandwich as claimed in claim 4 or 5, characterized in that said basic non-woven fabric (10) comprises flax fibres.

7. A sandwich as claimed in any of claims 4 to 6, characterized in that said basic non-woven fabric (10) comprises sisal fibres.

8. A sandwich as claimed in any of claims 4 to 7, characterized in that said basic non-woven fabric (10) comprises cotton fibres.

9. A sandwich as claimed in any of claims 4 to 8, characterized in that said basic non-woven fabric (10) comprises wool fibres.

10. A sandwich as claimed in any of claims 1 to 9, characterized in that said basic non-woven fabric (10) has a weight per unit area of from 500 to 3000 g/m².

11. A sandwich as claimed in claim 10, characterized in that said basic non-woven fabric (10) has a weight per unit area of from 1500 to 2500 g/m².

12. A sandwich as claimed in claim 1, characterized in that said basic non-woven fabric (10) has a weight per unit area of approximately 2000 g/m².

13. A sandwich as claimed in any of claims 4 to 12, characterized in that said basic non-woven fabric (10) consists of from 20 to 80% by weight of synthetic fibres and from 80 to 20% by weight of natural fibres.

14. A sandwich as claimed in claim 13, characterized in that said basic non-woven fabric (10) comprises synthetic fibres and natural fibres in approximately equal proportions by weight.

15. A sandwich as claimed in claim 1, characterized in that said tie layer (12) with a thermoplastic content is a non-woven fabric.

16. A sandwich as claimed in claim 15, characterized in that said tie layer (12) is a polyester non-woven fabric.

17. A sandwich as claimed in claim 1, characterized in that said tie layer (12) with a thermoplastic content is a foam sheet.

18. A sandwich as claimed in any of the preceding claims, characterized in that said tie layer (12) has a weight per unit area of from 100 to 500 g/m².

19. A sandwich as claimed in claim 18, characterized in that said tie layer (12) has a weight per unit area of approximately 300 g/m².

20. A sandwich as claimed in any of the preceding claims, characterized in that said cover layer (14) is attached to said basic non-woven fabric (10) by way of said tie layer (12).

21. A sandwich as claimed in claim 20, characterized in that said cover layer (14) is a barrier sheet.

22. A sandwich as claimed in any of the preceding claims, characterized in that said cover layer (14) is made of polyvinyl chloride.

23. A sandwich as claimed in any of the preceding claims, characterized in that said cover layer (14) is made of a fabric.

24. A sandwich as claimed in any of the preceding claims, characterized in that there is a foam layer (18) between said cover layer (14) and said tie layer (12), and said foam layer (18) is attached to said cover layer (14).

25. A sandwich as claimed in claim 1, characterized in that there is a gradient in the density of the plastic material in said basic non-woven fabric (10), in a direction normal to the sheet plane thereof.

26. A sandwich as claimed in claim 25, characterized in that the change in density is continuous in nature.

27. A sandwich as claimed in claim 25, characterized in that the change in density is discontinuous in nature.

28. A process for producing a sheet-like sandwich as claimed in any of the preceding claims wherein a basic non-woven fabric with a thermoplastic synthetic fibres content is bonded by the application of pressure and heat, and is attached on at least one side thereof to a cover layer, characterized in that said basic non-woven fabric is first heated to a temperature above the softening temperature of the synthetic fibres of said basic non-woven fabric; and then the heated basic non-woven fabric, a non-preheated tie layer with a thermoplastic content attached thereto the material of which is the same as or different from that of the synthetic fibres of the basic non-woven fabric and whose softening temperature is above that of the synthetic fibres of the basic non-woven fabric, and said cover layer which is not preheated either, are subjected to a common compression operation, in which both the bonding of said basic non-woven fabric and the attachment of the cover layer thereto are effected.

29. A method as claimed in claim 28, characterized in that said basic non-woven fabric is preheated by a hot air flow.

30. A method as claimed in claim 28 or 29, characterized in that said basic non-woven fabric, after being preheated, is first precompressed.

31. A method as claimed in claim 28, characterized in that said tie layer is attached to said cover layer before being united with said basic non-woven fabric.

32. A method as claimed in claim 28, characterized in that said tie layer is adhesively bonded to said cover layer.

33. A method as claimed in claim 28, characterized in that said cover layer is preheated in addition to said basic non-woven fabric, namely to a temperature above ambient temperature, but below that to which said basic non-woven fabric is preheated.

34. A method as claimed in any of claims 28 to 33, characterized in that the temperature to which said cover layer is preheated is between 80 and 120°C.

35. A method as claimed in any of claims 28 to 34, characterized in that said basic non-woven fabric is heated to approximately 200°C before the preheated basic non-woven fabric, the non-preheated or but slightly preheated tie layer, and the non-preheated cover layer are stacked together.

36. A method as claimed in claim 35, characterized in that said compression operation is performed at a temperature of approximately 60°C.

37. A method as claimed in any of claims 28 to 36, characterized in that the compressing time is from 30 to 140 seconds.

38. A method as claimed in claim 37, characterized in that the compressing time is approximately 90 seconds.

39. Use of a sandwich as claimed in any of claims 1 to 27 for the lining of motor vehicles.

40. Use of a sandwich as claimed in any of claims 1 to 27 as a packaging material.

41. Use of a sandwich as claimed in any of claims 1 to 27 as a component part for furniture.

## Revendications

1. Corps stratifié comprenant une partie de support en nappe en un non-tissé de base solidifié, avec une teneur en fibres synthétiques thermoplastiques, qui est pourvu au moins d'un côté d'une couche de recouvrement renfermant une matière synthétique, caractérisé en ce que le non-tissé de base (10) est lié à la couche de recouvrement (14, 18) par la mise en oeuvre de pression et de chaleur, à l'aide d'une couche intermédiaire (12) à composant thermoplastique, dont la matière est différente ou identique à celle des fibres synthétiques du non-tissé de base (10), et dont la température de ramollissement se situe au-dessus de celle des fibres synthétiques du non-tissé de base (10).

2. Corps stratifié selon la revendication 1, caractérisé en ce que le non-tissé de base (10) comprend des fibres de polyéthylène.

3. Corps stratifié selon la revendication 1 ou 2, caractérisé en ce que le non-tissé de base (10) comprend des fibres de polypropylène.

4. Corps stratifié selon l'une des revendications 1 à 3, caractérisé en ce que le non-tissé de base (10) est un non-tissé de fibres mélangées constitué de fibres synthétiques thermoplastiques et de fibres naturelles.

5. Corps stratifié selon la revendication 4, caractérisé en ce que le non-tissé de base (10) comprend des fibres de jute.

6. Corps stratifié selon la revendication 4 ou 5, caractérisé en ce que le non-tissé de base (10) comprend des fibres de lin.

7. Corps stratifié selon l'une des revendications 4 à 6, caractérisé en ce que le non-tissé de base (10) comprend des fibres de sisal.

8. Corps stratifié selon l'une des revendications 4 à 7, caractérisé en ce que le non-tissé de base (10) comprend des fibres de coton.

9. Corps stratifié selon l'une des revendications 4 à 8, caractérisé en ce que le non-tissé de base (10) comprend des fibres de laine.

10. Corps stratifié selon l'une des revendications 1 à 9, caractérisé a ce que le non-tissé de base (10) présente une masse par unité de surface de 500 à 3000 g/m².

11. Corps stratifié selon la revendication 10, caractérisé en ce que le non-tissé de base (10) présente une masse par unité de surface de 1500 à 2500 g/m².

12. Corps stratifié selon la revendication 1, caractérisé en ce que le non-tissé de base (10) présente une masse par unité de surface d'environ 2000 g/m².

13. Corps stratifié selon l'une des revendications 4 à 12, caractérisé en ce que le non-tissé de base (10) est constitué de 20 à 80 % en poids de fibres synthétiques et de 80 à 20 % en poids de fibres naturelles.

14. Corps stratifié selon la revendication 13, caractérisé en ce que le non-tissé de base (10) renferme des proportions sensiblement identiques en poids de fibres synthétiques et de fibres naturelles.

15. Corps stratifié selon la revendication 1, caractérisé en ce que la couche intermédiaire (12) à composant thermoplastique est un non-tissé.

16. Corps stratifié selon la revendication 15, caractérisé en ce que la couche intermédiaire (12) est un non-tissé de polyester.

17. Corps stratifié selon la revendication 1, caractérisé en ce que la couche intermédiaire (12) à composant thermoplastique est une feuille de mousse.

18. Corps stratifié selon l'une des revendications précédentes, caractérisé en ce que la couche intermédiaire (12) présente une masse par unité de surface de 100 à 500 g/m².

19. Corps stratifié selon la revendication 18, caractérisé en ce que la couche intermédiaire (12) présente une masse par unité de surface d'environ 300 g/m².

20. Corps stratifié selon l'une des revendications précédentes, caractérisé en ce que la couche de recouvrement (14) est reliée au non-tissé de base (10) à l'aide de la couche intermédiaire (12).

21. Corps stratifié selon la revendication 20, caractérisé en ce que la couche de recouvrement (14) est une feuille de barrage.

22. Corps stratifié selon l'une des revendications précédentes, caractérisé en ce que la couche de recouvrement (14) est réalisée en poly(chlorure de vinyle).

23. Corps stratifié selon l'une des revendications précédentes, caractérisé en ce que la couche de recouvrement (14) est réalisée en tissus.

24. Corps stratifié selon l'une des revendications précédentes, caractérisé en ce qu'entre la couche de recouvrement (14) et la couche intermédiaire (12) se trouve une couche de mousse (18) qui est liée à la couche de recouvrement (14).

25. Corps stratifié selon la revendication 1, caractérisé en ce que le non-tissé de base (10) présente dans une direction normale au plan de la nappe, un gradient de densité de la matière synthétique.

26. Corps stratifié selon la revendication 25, caractérisé en ce que la variation de densité est continue.

27. Corps stratifié selon la revendication 25, caractérisé en ce que la variation de densité est discontinue.

28. Procédé de fabrication d'un corps stratifié en nappe selon l'une des revendications précédentes, dans lequel un non-tissé de base, qui présente une teneur en fibres synthétiques thermoplastiques, est solidifié et lié sur au moins une face à une couche de recouvrement, par la mise en oeuvre de chaleur et de pression, caractérisé en ce que le non-tissé de base est tout d'abord chauffé à une température qui se situe au-dessus de la température de ramollissement des fibres synthétiques du non-tissé de base, et en ce qu'ensuite le non-tissé de base chauffé, une couche intermédiaire qui s'y raccorde et comprend un composant thermoplastique, dont la matière est différente ou identique à celle des fibres synthétiques du non-tissé de base et dont la température de ramollissement se situe au-dessus de celle des fibres synthétiques du non-tissé de base, et qui n'est pas préchauffée, ainsi que la couche de recouvrement également non préchauffée, sont soumis à une opération commune de compression, lors de laquelle a lieu aussi bien la solidification du non-tissé de base que la liaison de la couche de recouvrement à celui-ci.

29. Procédé selon la revendication 28, caractérisé en ce que le non-tissé de base est chauffé par de l'air chaud en circulation.

30. Procédé selon la revendication 28 ou 29, caractérisé en ce que le non-tissé de base, après le préchauffage, est tout d'abord soumis à une compression primaire.

31. Procédé selon la revendication 28, caractérisé en ce que la couche intermédiaire est liée à la couche de recouvrement avant d'être réunie au non-tissé de base.

32. Procédé selon la revendication 28, caractérisé en ce que la couche intermédiaire est collée à la couche de recouvrement.

33. Procédé selon la revendication 28, caractérisé en ce qu'en plus du non-tissé de base, la couche de recouvrement est elle aussi préchauffée, ceci à une température au-dessus de la température ambiante, mais toutefois en-dessous de la température à laquelle est préchauffé le non-tissé de base.

34. Procédé selon l'une des revendications 28 à 33, caractérisé en ce que la température de préchauffage de la couche de recouvrement se situe entre 80 et 120°C.

35. Procédé selon l'une des revendications 28 à 34, caractérisé en ce que le non-tissé de base, avant le regroupement de l'empilement constitué par le non-tissé de base préchauffé, la couche intermédiaire non préchauffée ou seulement faiblement préchauffée et la couche de recouvrement non préchauffée, est chauffé à environ 200°C.

36. Procédé selon la revendication 35, caractérisé en ce que l'opération de compression est effectuée à une température d'environ 60°C.

37. Procédé selon l'une des revendications 28 à 36, caractérisé en ce que la durée de compression est environ comprise de 30 à 140 secondes.

38. Procédé selon la revendication 37, caractérisé en ce que la durée de compression est environ égale à 90 secondes.

39. Utilisation du corps stratifié selon l'une des revendications 1 à 27 pour le garnissage intérieur de véhicules automobiles.

40. Utilisation du corps stratifié selon l'une des revendications 1 à 27 en tant que matériau d'emballage.

41. Utilisation du corps stratifié selon l'une des revendications 1 à 27 en tant qu'élément de construction de meubles.
